# EUROPÄISCHE PATENTSCHRIFT

(11) **EP 2 555 402 B1**
(45) Veröffentlichungstag und Bekanntmachung des Hinweises auf die Patenterteilung: **15.05.2019**
(21) Anmeldenummer: 11176313.2
(22) Anmeldetag: 02.08.2011
(51) Int. Cl.: H02M 3/156, H02M 1/00

(54) **Schaltwandler**
Converter
Convertisseur

(43) Veröffentlichungstag der Anmeldung: 06.02.2013
(73) Patentinhaber: Siemens Aktiengesellschaft, 80333 München (DE)
(72) Erfinder: Berger, Erik, 1030 Wien (AT)
(74) Vertreter: Maier, Daniel Oliver

(56) Entgegenhaltungen:
- EP-A1- 0 420 074
- EP-A1- 0 696 102
- US-A1- 2007 041 133

## Beschreibung

Die Erfindung betrifft einen Schaltwandler, umfassend einen Transformator mit einer Primärwicklung und einer Sekundärwicklung, wobei die Primärwicklung über ein Schaltelement an eine eingangsseitige Gleichspannung angeschaltet ist, wobei ein Wicklungsende der Sekundärwicklung über eine Diode an einen Ausgang geführt ist, wobei ein Wicklungsanfang der Sekundärwicklung mit einem sekundärseitigen Bezugspotenzial verbunden ist, wobei an die Sekundärwicklung über eine Auskoppelungsschaltung ein erster Kondensator angeschlossen ist und wobei an den ersten Kondensator über eine Stabilisierungsschaltung ein zweiter Kondensator angeschlossen ist, an dem eine Versorgungsspannung zur Versorgung eines sekundärseitigen Reglers anliegt.

Bei einem Schaltwandler handelt es sich um einen bekannten elektronischen Spannungswandler zur Umwandlung einer Gleichspannung (typischerweise einer gleichgerichtete Wechselspannung) in eine andere Gleichspannung unter Verwendung eines Transformators als magnetischen Speicher. In einer Ladephase wird über ein geschlossenes primärseitiges Schaltelement Energie im Transformator gespeichert und in einer anschließenden Sperrphase wird bei offenem primärseitigen Schaltelement Energie aus dem Transformator über eine Gleichrichterschaltung sekundärseitig abgegeben.

Zur Ansteuerung des Schaltelements und zur Regelung der Ausgangsspannung und/oder des Ausgangsstromes sind Komponenten vorhanden, die mit einer Versorgungsspannung versorgt werden.

Insbesondere Schaltwandler, die Leistungen unter 200 Watt übertragen, weisen eine primärseitige Stromregelung auf.

Diese primärseitige Stromregelung hat den Nachteil einer prinzipbedingten Ungenauigkeit, da in erster Linie die in den Transformator eingebrachte Energie begrenzt wird. Diese Energie erzeugt sekundärseitig abhängig von der Ausgangsspannung mitunter einen hohen Ausgangsstrom.

Um hohe Ausgangsströme zu vermeiden kennt man beispielsweise aus der AT 403 535 einen Schaltwandler, bei dem die Ausgangsspannung über eine primärseitige Hilfswicklung gemessen wird. Dabei wird in die Strombegrenzung derart eingegriffen, dass die in den Transformator eingebrachte Energie reduziert wird, wenn die Ausgangsspannung sinkt. Eine Toleranz des auf diese Weise beeinflussten Ausgangsstromes beleibt jedoch bestehen.

Für eine genauere Regelung des Ausgangsstromes ist nach dem Stand der Technik eine sekundärseitige Stromregelung vorgesehen. Eine solche sekundärseitige Stromregelung ist vor allem bei kleinen Ausgangsspannungen oder bei einer fehlenden Ausgangsspannung (bei einem Kurzschluss) wichtig, um den Ausgangsstrom unter Kontrolle zu halten. Versorgt wird ein sekundärseitiger Stromregler mittels einer sekundärseitigen Versorgungsspannung. Dabei tritt das Problem auf, dass bei einer fehlenden Ausgangsspannung auch die Versorgungsspannung für die Regelung nicht mehr zur Verfügung steht. Die Regelung muss dann anderwärtig versorgt werden.

Eine bekannte Lösung besteht darin, die Versorgung der Regelung über einen Kondensator zu puffern. Erst wenn die Kondensatorspannung unter einen gewissen Wert abfällt, wird der Schaltwandler abgeschaltet. Eine solche Maßnahme ist als Hiccup bekannt.

Eine weitere Lösung stellt die Anordnung einer getrennten sekundärseitigen Hilfswicklung dar. Über diese Hilfswicklung ist auch im Kurzschlussfall bei fehlender Ausgangsspannung eine geringe Energiemenge ableitbar. Diese reicht aus, um die Versorgung des sekundärseitigen Stromreglers aufrecht zu erhalten. Die Hilfswicklung weist dabei gegenüber der Haupt-Sekundärwicklung eine unterschiedliche Streuinduktivität (Kopplung) zur Primärwicklung auf. Damit ist eine definierte Mindestenergie über die Hilfswicklung auskoppelbar. Die zusätzliche Hilfswicklung bedeutet jedoch auch einen erhöhten Bauteilaufwand. Es ist eine zusätzliche Elektronik zum Gleichrichten und Spannungsbegrenzen erforderlich.

Einen Schaltwandler mit zwei Sekundärwicklungen kennt man beispielsweise aus der EP 0 420 074 A1, wobei mittels dieser Sekundärwicklungen zwei Ausgangsspannungen gewonnen werden. Auch die US 2007/041133 A1 offenbart einen Schaltwandler mit mehreren Ausgangsspannungen. Dabei ist nur eine Sekundärwicklung angeordnet, an der mehrerer Gleichrichterschaltungen anliegen.

Aus der EP 0 696 102 A1 ist eine Schaltwandler mit einer Hilfsschaltung zur Gewinnung einer Versorgungsspannung gemäß dem Oberbegriff von Anspruch 1 bekannt. Die Versorgungsspannung dient dabei zur Versorgung eines Nachreglers.

Der Erfindung liegt die Aufgabe zugrunde, für einen Schaltwandler der eingangs genannten Art eine Verbesserung gegenüber dem Stand der Technik anzugeben.

Erfindungsgemäß wird diese Aufgabe gelöst durch die Merkmale des Anspruchs 1. Weiterbildungen der Erfindung finden sich in den Unteransprüchen.

Dabei ist die Stabilisierungsschaltung über ein viertes stromsperrendes Element mit dem ersten Anschluss des zweiten Kondensators verbunden und ein erster Anschluss eines Ausgangskondensators ist über ein fünftes stromsperrendes Element mit dem ersten Anschluss des zweiten Kondensators verbunden, wobei die Versorgungsspannung in einem Normalbetrieb oder in einem Burstbetrieb des Schaltwandlers direkt aus einer am Ausgangskondensator anliegenden Ausgangsspannung abgeleitet ist. Mit dieser Hilfsschaltung steht auch bei fehlender Ausgangsspannung eine sekundärseitige Versorgungsspannung zur Verfügung, ohne dass eine zusätzliche Hilfswicklung erforderlich ist. Die Versorgungsspannung wird alternativ über die beschriebene Hilfsschaltung oder direkt aus der Ausgangsspannung abgeleitet. Im Normalbetrieb oder im Burstbetrieb erfolgt die Versorgung eines sekundärseitigen Verbrauchers über die Ausgangsspannung. Die Leistungsaufnahme der Hilfsschaltung ist dabei gering.

Dieser Vorteil ist vor allem bei Schaltwandlern zur Übertragung niedriger Leistungen (bis ca. 200 Watt) bedeutend, weil hier die Einsparung einer Hilfswicklung eine signifikante Vereinfachung und Verbilligung bedeutet. Der Bauteilaufwand der vorliegenden Erfindung übersteigt dabei nicht den Aufwand, den eine Hilfswicklungslösung für die zusätzliche Elektronik (Gleichrichtung und Spannungsbegrenzung) erfordern würde.

Zusätzlich wird Platz gespart, weil gegenüber einer Hilfswicklungslösung mindestens ein zusätzlicher Pin am Transformator eingespart wird. Eine Platzersparnis ergibt sich zudem aus dem Wegfall erforderlicher fertigungstechnischer Abstände, die zu einem Pin einzuhalten sind. Gerade bei kleinen Geräten ist damit eine gegenüber Hilfswicklungslösungen verkleinerte Platine einsetzbar. Zudem kann gegebenenfalls ein kleiner Transformator eingesetzt werden, wenn erforderliche Spannungsabstände reduziert sind.

Größere Spannungsabstände sind üblicherweise durch eine mittels einer Hilfswicklung erzeigte Versorgungsspannung vorgegeben.

Eine vorteilhafte Ausprägung der Erfindung sieht vor, dass die Auskoppelungsschaltung einen Koppelkondensator umfasst, der mit einem ersten Anschluss an ein Wicklungsende der Sekundärwicklung und mit dem zweiten Anschluss über ein strombegrenzendes oder stromrichtendes erstes Element an das sekundärseitige Bezugspotenzial angeschaltet ist und dass dabei der zweite Anschluss des Koppelkondensators zusätzlich über ein stromrichtendes oder induktives zweites Element an einen ersten Anschluss des ersten Kondensators angeschlossen ist.

Damit ist ein einfacher Schaltungsaufbau gegeben, der mit wenigen Schaltungselementen realisierbar ist. Das erste Element ist beispielsweise als Widerstand ausgebildet und das zweite Element als Spule.

In einer günstigen Alternative ist das erste Element als erste Diode ausgebildet, deren Anoden mit dem sekundärseitigen Bezugspotenzial und deren Kathode mit dem zweiten Anschluss des Koppelkondensators verbunden ist. Das zweite Element ist als zweite Diode ausgebildet, deren Anode mit dem zweiten Anschluss des Koppelkondensators und deren Kathode mit dem ersten Anschluss des ersten Kondensators verbunden ist. Bei dieser Ausprägung weist der in den ersten Kondensator fließende Strom keinen negativen Anteil auf, sodass eine effiziente Aufladung des Kondensators erfolgt.

Eine weitere Verbesserung sieht vor, dass der erste Anschluss des Koppelkondensators über einen ersten Widerstand an das Wicklungsende der Sekundärwicklung angeschaltet ist. Der erste Widerstand wirkt dabei als strombegrenzendes Sicherungselement zum Schutz der Schaltungselemente.

Eine vorteilhafte Stabilisierungsschaltung umfasst ein spannungsbegrenzendes Element, welchem eine Glättungsschaltung nachgeschaltet ist. Günstigerweise ist die Glättungsschaltung durch einen Glättungskondensator gebildet, dessen erster Anschluss mit dem spannungsbegrenzenden Element verbunden ist und dessen zweiter Anschluss mit dem sekundärseitigen Bezugspotenzial verbunden ist.

Das spannungsbegrenzende Element ist in einer einfachen Ausprägung als NPN-Transistor ausgebildet, dessen Kollektor mit dem ersten Anschluss des ersten Kondensators und über einen zweiten Widerstand in Serie mit einer Zenerdiode mit dem sekundärseitigen Bezugspotenzial verbunden ist. Dabei ist der Emitter des NPN-Transistors an einem ersten Anschluss des zweiten Kondensators angeschaltet und die Basis des NPN-Transistors ist über einen dritten Widerstand mit der Verbindung zwischen zweitem Widerstand und der Zenerdiode verbunden.

Dabei ist es günstig, wenn das vierte stromsperrende Element als vierte Diode ausgebildet ist, deren Anoden mit der Stabilisierungsschaltung und deren Kathode mit dem ersten Anschluss des zweiten Kondensators verbunden ist und dass das fünfte stromsperrende Element als fünfte Diode ausgebildet ist, deren Anode mit dem ersten Anschluss des Ausgangskondensators und deren Kathode mit dem ersten Anschluss des zweiten Kondensators verbunden ist.

Vorteilhaft ist des Weiteren, wenn ein Schaltungsknoten zwischen Stabilisierungsschaltung und viertem stromsperrenden Element über einen vierten Widerstand mit dem sekundärseitigen Bezugspotenzial verbunden ist. Auf diese Weise wird ein möglicher Leckstrom durch das vierte stromsperrende Element zum sekundärseitigen Bezugspotenzial abgeleitet, sodass am spannungsbegrenzenden Element der Stabilisierungsschaltung keine störende Aufladung entsteht.

In einer vorteilhaften Ausprägung ist ein sekundärseitiger Regler an die Versorgungsspannung angeschlossen. Dieser Regler sorgt für eine genaue sekundärseitige Stromregelung, auch wenn die Ausgangsspannung des Schaltwandlers einbricht.

Von Vorteil ist es, wenn es sich bei dem Schaltwandler um einen Sperrwandler handelt, weil hier die Auskopplung nahezu verlustfrei möglich ist.

Die Erfindung wird nachfolgend in beispielhafter Weise unter Bezugnahme auf die beigefügten Figuren erläutert. Es zeigen in schematischer Darstellung:
- Fig. 1: Blockschaltbild eines Schaltwandlers mit einer Hilfsversorgung ohne Hilfswicklung
- Fig. 2: Spannungsverläufe über der Zeit

Bei der beispielhaften Anordnung handelt es sich um einen Sperrwandler. An eine eingangsseitige Gleichspannung 1 ist eine Primärwicklung Wp eines Transformators mittels eines Schaltelements S angeschaltet. Das Schaltelement S wird üblicherweise mittels eines PWM-Kontrollers mit einem variablen Tastverhältnis und einer vorgegebene Taktfrequenz angesteuert.

Eine Sekundärwicklung Ws des Transformators ist mit einem Wicklungsanfang an ein sekundärseitiges Bezugspotenzial M angeschlossen. Das Wicklungsende der Sekundärwicklung Ws ist über eine Sekundärdiode Ds mit dem Ausgang des Sperrwandlers verbunden. An diesem Ausgang ist ein Ausgangskondensator Ca angeordnet, an dem die Ausgangsspannung Ua anliegt. Die Ausgangsspannung Ua ist dabei auf das sekundärseitige Bezugspotenzial M bezogen.

Eine Hilfsschaltung HS ist an die Sekundärwicklung Ws angeschlossen und umfasst eine Auskoppelungsschaltung 2 sowie eine Stabilisierungsschaltung 3. Die Auskoppelungsschaltung 2 umfasst dabei einen ersten Kondensator C1 und stromrichtende Elemente D1, D2 für eine kapazitive Auskopplung der Spannung am Ausgang der Sekundärwicklung Ws des Sperrwandlers. Es ergibt sich ein Signal, das mittels stromrichtender Elemente (z.B. Dioden) um das sekundärseitige Bezugspotenzial (z.B. Null Volt) in eine positive und eine negative Spannung U1 verwandelbar ist. Die positiven Anteile dieser Wechselspannung U1 werden mittels gleichrichtender Dioden D1, D2 mit der Taktfrequenz des Sperrwandlers nutzbar ausgekoppelt. Im dargestellten Beispiel wird eine positive Spannung U2 ausgekoppelt. Zusätzlich sind die negativen Anteile der Wechselspannung U1 zur Erzeugung einer negativen Hilfsspannung nutzbar, wenn eine Spannung U2 mit positiven und negativen Anteilen ausgekoppelt wird.

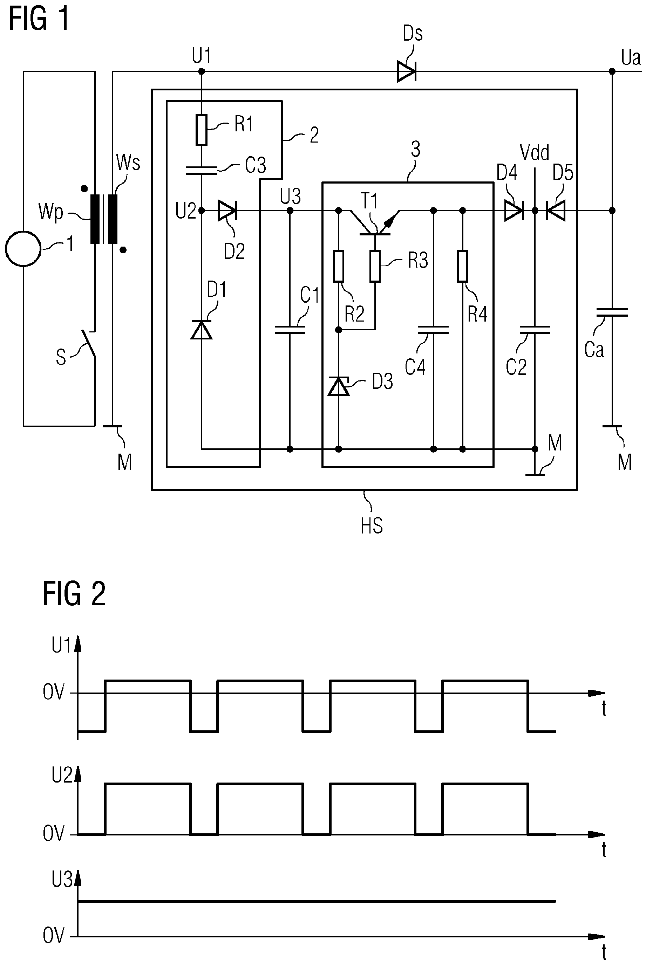

Im konkreten Beispiel gemäß Fig. 1 wird das Wicklungsende der Sekundärwicklung Ws über einen ersten Widerstand R1 an den ersten Anschluss des Koppelkondensators C3 angeschlossen. Der zweite Anschluss des Koppelkondensators C3 ist mit der Kathode der ersten Diode D1 verbunden, deren Anoden am sekundären Bezugspotenzial M anliegt. Alternativ zur ersten Diode D1 ist ein Widerstand vorsehbar, wobei ein negativer Spannungsanteil zu berücksichtigen ist.

Zusätzlich ist der zweite Anschluss des Koppelkondensators C3 mit der Anode der zweiten Diode D2 verbunden, deren Kathode mit dem ersten Anschluss des ersten Kondensators C1 verbunden ist. Als Alternative zur zweiten Dioden D2 ist eine Drossel anordenbar, wobei eine rippelbehaftete Spannung auftritt.

Der zweite Anschluss des ersten Kondensators C1 ist mit dem sekundärseitigen Bezugspotenzial M verbunden, sodass sich die am ersten Anschluss anliegende Spannung U3 auf dieses Potenzial M bezieht.

Zur Stabilisierung der am ersten Kondensator C1 anliegenden Spannung U3 ist eine Stabilisierungsschaltung 3 nachgeordnet. Diese besteht aus einem spannungsbegrenzenden Element T1, zum Beispiel einem NPN-Transistor. Am Kollektor liegt die zu stabilisierende Spannung U3 an. Der Kollektor ist dabei zusätzlich über einen zweiten Widerstand R2 und eine Zenerdiode D3 mit dem sekundärseitigen Bezugspotenzial M verbunden.

Die Basis des NPN-Transistors ist über eine dritten Widerstand R3 an die Verbindung zwischen zweitem Widerstand R2 und Zenerdiode D3 angeschaltet. Der dritte Widerstand R3 schützt den NPN-Transistor und die Zenerdiode D3 vor Überspannungen. Die Widerstände sind dabei hochohmig ausgelegt, sodass Verluste vernachlässigbar sind. Die Durchbruchspannung der Zenerdiode D3 bestimmt die Ausgangsspannung der Stabilisierungsschaltung 3 und damit die Spannung zum Laden des zweiten Kondensators C2, an der ein zu versorgender sekundärseitiger Verbraucher anliegt.

Um die Spannung am Ausgang der Stabilisierungsschaltung 3 zu glätten, ist eine Glättungsschaltung vorgesehen. Diese besteht im vorliegenden Beispiel aus einem Glättungskondensator C4, dessen ersten Anschluss mit dem Emitter des NPN-Transistors und dessen zweiter Anschluss mit dem sekundärseitigen Bezugspotenzial verbunden ist.

Über eine Oderschaltung, bestehend aus zwei Dioden D4, D5 ist der zweite Kondensator C2 sowohl an die Hilfsschaltung HS als auch an die Ausgangsspannung Ua angeschlossen. Im Normalbetrieb und auch im Burstbetrieb erfolgt die sekundärseitige Versorgung über die Ausgangsspannung Ua. Nur wenn die Ausgangsspannung Ua einbricht, wird die Versorgung mittels der Hilfsschaltung HS durchgeführt. An die Versorgungsspannung Vdd ist eine nicht dargestellte sekundärseitige Stromregelung angeschlossen.

Die vierte Diode D4 verhindert einen Stromrückfluss aus dem zweiten Kondensator C2 in die Hilfsschaltung HS. Allerdings ist es möglich, dass ein Leckstrom in Sperrrichtung durch die vierte Diode D4 fließt. Damit dieser Leckstrom nicht zu einer störenden Aufladung des Emitteranschlusses des NPN-Transistors führt, ist als Schutzelement ein hochohmiger Widerstand angeordnet, der mit einer Seite an die Verbindung zwischen Emitter und vierter Diode D4 und mit der anderen Seite mit dem sekundärseitigen Bezugspotenzial M verbunden ist.

In Fig. 2 sind die Verläufe der Spannungen U1, U2, U3 über der Zeit t dargestellt. Die Spannungen U1, U2, U3 treten an den in Fig. 1 eingezeichneten Schaltungsknoten auf und sind auf das sekundärseitige Bezugspotenzial M bezogen.

Mittels des Koppelkondensators C3 und der ersten Diode D1 wird die erste Spannung U1 in ihrer Form unverändert in den positiven Bereich verschoben, sodass kein negativer Anteil mehr vorhanden ist. In weiterer Folge wird mittels der zweiten Diode D2 und des ersten Kondensators C1 die verschobene Spannung U2 gleichgerichtet. Es handelt sich dabei um eine Spitzenwertgleichrichtung. Der Verlauf dieser gleichgerichteten Spannung U3 ist im unteren Diagramm dargestellt.

## Patentansprüche

1. Schaltwandler, umfassend einen Transformator mit einer Primärwicklung (Wp) und einer Sekundärwicklung (Ws), wobei die Primärwicklung über ein Schaltelement (S) an eine eingangsseitige Gleichspannung (1) angeschaltet ist, wobei ein Wicklungsende der Sekundärwicklung (Ws) über eine Diode (Ds) an einen Ausgang geführt ist, wobei ein Wicklungsanfang der Sekundärwicklung (Ws) mit einem sekundärseitigen Bezugspotenzial (M) verbunden ist, wobei an die Sekundärwicklung (Ws) über eine Auskoppelungsschaltung (2) ein erster Kondensator (C1) angeschlossen ist und wobei an den ersten Kondensator (C1) über eine Stabilisierungsschaltung (3) ein zweiter Kondensator (2) angeschlossen ist, an dem eine Versorgungsspannung (Vdd) zur Versorgung eines sekundärseitigen Reglers anliegt **dadurch gekennzeichnet, dass** die Stabilisierungsschaltung (3) über ein viertes stromsperrendes Element (D4) mit dem ersten Anschluss des zweiten Kondensators (C2) verbunden ist und dass ein erster Anschluss eines Ausgangskondensators (Ca) über ein fünftes stromsperrendes Element (D5) mit dem ersten Anschluss des zweiten Kondensators (C2) verbunden ist und dass die Versorgungsspannung (Vdd) in einem Normalbetrieb oder in einem Burstbetrieb des Schaltwandlers direkt aus einer am Ausgangskondensator (Ca) anliegenden Ausgangsspannung abgeleitet ist.

2. Schaltwandler nach Anspruch 1, **dadurch gekennzeichnet, dass** die Auskoppelungsschaltung (2) einen Koppelkondensator (C3) umfasst, der mit einem ersten Anschluss an ein Wicklungsende der Sekundärwicklung und mit dem zweiten Anschluss über ein strombegrenzendes oder stromrichtendes erstes Element (D1) an das sekundärseitige Bezugspotenzial (M) angeschaltet ist und dass dabei der zweite Anschluss des Koppelkondensators (C3) zusätzlich über ein stromrichtendes oder induktives zweites Element (D2) an einen ersten Anschluss des ersten Kondensators (C1) angeschlossen ist.

3. Schaltwandler nach Anspruch 2, **dadurch gekennzeichnet, dass** das erste Element (D1) als erste Diode ausgebildet ist, deren Anoden mit dem sekundärseitigen Bezugspotenzial (M) und deren Kathode mit dem zweiten Anschluss des Koppelkondensators (C3) verbunden ist und dass das zweite Element (D2) als zweite Diode ausgebildet ist, deren Anode mit dem zweiten Anschluss des Koppelkondensators (C3) und deren Kathode mit dem ersten Anschluss des ersten Kondensators (C1) verbunden ist.

4. Schaltwandler nach Anspruch 2 oder 3, **dadurch gekennzeichnet, dass** der erste Anschluss des Koppelkondensators (C3) über einen ersten Widerstand (R1) an das Wicklungsende der Sekundärwicklung (Ws) angeschaltet ist.

5. Schaltwandler nach einem der Ansprüche 1 bis 4, **dadurch gekennzeichnet, dass** die Stabilisierungsschaltung (3) ein spannungsbegrenzendes Element (T1) umfasst, welchem eine Glättungsschaltung nachgeschaltet ist.

6. Schaltwandler nach Anspruch 5, **dadurch gekennzeichnet, dass** die Glättungsschaltung durch einen Glättungskondensator (C4) gebildet ist, dessen erster Anschluss mit dem spannungsbegrenzenden Element (T1) verbunden ist und dessen zweiter Anschluss mit dem sekundärseitigen Bezugspotenzial (M) verbunden ist.

7. Schaltwandler nach Anspruch 5 oder 6, **dadurch gekennzeichnet, dass** das spannungsbegrenzende Element (T1) als NPN-Transistor ausgebildet ist, dessen Kollektor mit dem ersten Anschluss des ersten Kondensators (C1) und über einen zweiten Widerstand (R2) in Serie mit einer Zenerdiode (D3) mit dem sekundärseitigen Bezugspotenzial (M) verbunden ist, dass der Emitter des NPN-Transistors an einem ersten Anschluss des zweiten Kondensators (C2) angeschaltet ist und dass die Basis des NPN-Transistors über einen dritten Widerstand (R3) mit der Verbindung zwischen zweitem Widerstand (R2) und der Zenerdiode (D3) verbunden ist.

8. Schaltwandler nach einem der Ansprüche 1 bis 7, **dadurch gekennzeichnet, dass** das vierte stromsperrende Element (D4) als vierte Diode ausgebildet ist, deren Anoden mit der Stabilisierungsschaltung (3) und deren Kathode mit dem ersten Anschluss des zweiten Kondensators (C2) verbunden ist und dass das fünfte stromsperrende Element (D5) als fünfte Diode ausgebildet ist, deren Anode mit dem ersten Anschluss des Ausgangskondensators (Ca) und deren Kathode mit dem ersten Anschluss des zweiten Kondensators (C2) verbunden ist.

9. Schaltwandler nach einem der Ansprüche 1 bis 8, **dadurch gekennzeichnet, dass** ein Schaltungsknoten zwischen Stabilisierungsschaltung (3) und viertem stromsperrenden Element (D4) über einen vierten Widerstand (R4) mit dem sekundärseitigen Bezugspotenzial (M) verbunden ist.

10. Schaltwandler nach einem der Ansprüche 1 bis 9, **dadurch gekennzeichnet, dass** ein sekundärseitiger Regler an die Versorgungsspannung (Vdd) angeschlossen ist.

11. Schaltwandler nach einem der Ansprüche 1 bis 10, **dadurch gekennzeichnet, dass** der Schaltwandler als Sperrwandler ausgebildet ist.

## Claims

1. Converter, comprising a transformer with a primary winding (Wp) and a secondary winding (Ws), wherein the primary winding is connected to an input-side direct voltage (1) by way of a switching element (S), wherein a winding end of the secondary winding (Ws) is guided to an output by way of a diode (Ds), wherein a winding start of the secondary winding (Ws) is connected to a secondary-side reference potential (M), wherein a first capacitor (C1) is connected to the secondary winding (Ws) by way of an out-coupling circuit (2) and wherein a second capacitor (2), at which a supply voltage (Vdd) for supplying a secondary-side controller is present, is connected to the first capacitor (C1) by way of a stabilisation circuit, **characterised in that** the stabilisation circuit (3) is connected to the first terminal of the second capacitor (C2) by way of a further power-blocking element (D4) and that a first terminal of an output capacitor (Ca) is connected to the first terminal of the second capacitor (C2) by way of a fifth power-blocking element (D5), and that during normal operation or in a burst operation of the converter the supply voltage (Vdd) is deflected directly out of an output voltage present at the output capacitor (Ca).

2. Converter according to claim 1, **characterised in that** the out-coupling circuit (2) comprises a coupling capacitor (C3), which is connected with a first terminal to a winding end of the secondary winding and with the second terminal by way of a power-limiting or converting first element (D1) to the secondary-side reference potential (M) and that in the process the second terminal of the coupling capacitor (C3) is additionally connected to a first terminal of the first capacitor (C1) by way of a converting or inductive second element (D2).

3. Converter according to claim 2, **characterised in that** the first element (D1) is embodied as a first diode, the anode of which is connected to the secondary-side reference potential (M) and the cathode of which is connected to the second terminal of the coupling capacitor (C3) and that the second element (D2) is embodied as a second diode, the anode of which is connected to the second terminal of the coupling capacitor (C3) and the cathode of which is connected to the first terminal of the first capacitor (C1).

4. Converter according to claim 2 or 3, **characterised in that** the first terminal of the coupling capacitor (C3) is connected to the winding end of the secondary winding (Ws) by way of a first resistor (R1).

5. Converter according to one of claims 1 to 4, **characterised in that** the stabilisation circuit (3) comprises a voltage-limiting element (T1), downstream of which a smoothing circuit is arranged.

6. Converter according to claim 5, **characterised in that** the smoothing circuit is formed by a smoothing capacitor (C4), the first terminal of which is connected to the voltage-limiting element (T1) and the second terminal of which is connected to the secondary-side reference potential (M).

7. Converter according to claim 5 or 6, **characterised in that** the voltage-limiting element (T1) is embodied as an NPN transistor, the collector of which is connected to the first terminal of the first capacitor (C1) and via a second resistor (R2) in series with a Zener diode (D3) to the secondary-side reference potential (M), that the emitter of the NPN transistor is connected to a first terminal of the second capacitor (C2) and that the base of the NPN transistor is connected via a third resistor (R3) to the connection between the second resistor (R2) and the Zener diode (D3).

8. Converter according to one of claims 1 to 7, **characterised in that** the fourth power-blocking element (D4) is embodied as a fourth diode, the anode of which is connected to the stabilisation circuit (3) and the cathode of which is connected to the first terminal of the second capacitor (C2) and that the fifth power-blocking element (D5) is embodied as a fifth diode, the anode of which is connected to the first terminal of the output capacitor (Ca) and the cathode of which is connected to the first terminal of the second capacitor (C2) .

9. Converter according to one of claims 1 to 8, **characterised in that** a circuit node between the stabilisation circuit (3) and the fourth power-blocking element (D4) is connected to the secondary-side reference potential (M) by way of a fourth resistor (R4).

10. Converter according to one of claims 1 to 9, **characterised in that** a secondary-side controller is connected to the supply voltage (Vdd).

11. Converter according to one of claims 1 to 10, **characterised in that** the converter is embodied as a blocking oscillator-type converter.

## Revendications

1. Convertisseur, comprenant un transformateur avec un bobinage primaire (Wp) et un bobinage secondaire (Ws), dans lequel le bobinage primaire est connecté à une tension continue (1) côté entrée par un élément de commutation (S), dans lequel une extrémité de bobinage du bobinage secondaire (Ws) est dirigée sur une sortie par une diode (Ds), dans lequel un début de bobinage du bobinage secondaire (Ws) est relié à un potentiel de référence (M) côté secondaire, dans lequel un premier condensateur (C1) est connecté au bobinage secondaire (Ws) par le biais d'un circuit de découplage (2) et dans lequel est connecté au premier condensateur (C1) par un circuit de stabilisation (3), un deuxième condensateur (2) sur lequel est placée une tension d'alimentation (Vdd) pour alimenter un régulateur côté secondaire, **caractérisé en ce que** le circuit de stabilisation (3) est relié à la première connexion du deuxième condensateur (C2) par un quatrième élément de coupure de courant (D4) et qu'une première connexion d'un condensateur de sortie (Ca) est reliée à la première connexion du deuxième condensateur (C2) par un cinquième élément de coupure de courant (D5) et que la tension d'alimentation (Vdd) dans un fonctionnement normal ou dans un fonctionnement par rafales du convertisseur, est dérivée directement d'une tension de sortie placée sur le condensateur de sortie (Ca).

2. Convertisseur selon la revendication 1, **caractérisé en ce que** le circuit de découplage (2) comprend un condensateur de couplage (C3) qui est connecté par une première connexion à une extrémité de bobinage du bobinage secondaire et par la deuxième connexion au potentiel de référence (M) côté secondaire par le biais d'un premier élément (D1) de limitation ou de conversion du courant et qu'ainsi la deuxième connexion du condensateur de couplage (C3) est connectée en outre à une première connexion du premier condensateur (C1) par un deuxième élément de conversion du courant ou inductif (D2) .

3. Convertisseur selon la revendication 2, **caractérisé en ce que** le premier élément (D1) est conçu en tant que première diode dont l'anode est reliée au potentiel de référence (M) secondaire et dont la cathode est reliée à la deuxième connexion du condensateur de couplage (C3) et que le deuxième élément (D2) est conçu en tant que deuxième diode, dont l'anode est reliée à la deuxième connexion du condensateur de couplage (C3) et dont la cathode est reliée à la première connexion du premier condensateur (C1).

4. Convertisseur selon la revendication 2 ou 3, **caractérisé en ce que** la première connexion du condensateur de couplage (C3) est connectée à l'extrémité de bobinage du bobinage secondaire (Ws) par une première résistance (R1).

5. Convertisseur selon l'une des revendications 1 à 4, **caractérisé en ce que** le circuit de stabilisation (3) comprend un élément limiteur de tension (T1) auquel un circuit de lissage est connecté en aval.

6. Convertisseur selon la revendication 5, **caractérisé en ce que** le circuit de lissage est formé par un condensateur de lissage (C4) dont la première connexion est reliée à l'élément limiteur de tension (T1) et dont la deuxième connexion est reliée au potentiel de référence (M) côté secondaire.

7. Convertisseur selon la revendication 5 ou 6, **caractérisé en ce que** l'élément limiteur de tension (T1) est conçu en tant que transistor NPN dont le collecteur est relié à la première connexion du premier condensateur (C1) et au potentiel de référence (M) côté secondaire par une deuxième résistance (R2) en série avec une diode Zener (D3), que l'émetteur du transistor NPN est connecté sur une première connexion du deuxième condensateur (C2) et que la base du transistor NPN est reliée par une troisième résistance (R3) à la liaison entre la deuxième résistance (R2) et la diode Zener (D3).

8. Convertisseur selon l'une des revendications 1 à 7, **caractérisé en ce que** le quatrième élément de coupure de courant (D4) est conçu en tant que quatrième diode, dont l'anode est reliée au circuit de stabilisation (3) et dont la cathode est reliée à la première connexion du deuxième condensateur (C2) et que le cinquième élément de coupure de courant (D5) est conçu en tant que cinquième diode, dont l'anode est reliée à la première connexion du condensateur de sortie (Ca) et dont la cathode est reliée à la première connexion du deuxième condensateur (C2).

9. Convertisseur selon l'une des revendications 1 à 8, **caractérisé en ce qu'un** noeud de circuit entre le circuit de stabilisation (3) et le quatrième élément de coupure de courant (D4) est relié au potentiel de référence (M) côté secondaire par une quatrième résistance (R4).

10. Convertisseur selon l'une des revendications 1 à 9, **caractérisé en ce qu'un** régulateur côté secondaire est connecté à la tension d'alimentation (Vdd).

11. Convertisseur selon l'une des revendications 1 à 10, **caractérisé en ce que** le convertisseur est conçu en tant que convertisseur à transfert indirect.
